Europäisches Patentamt

European Patent Office

Office européen des brevets

(11) Veröffentlichungsnummer: **0 277 548 B1**

# EUROPÄISCHE PATENTSCHRIFT

(45) Veröffentlichungstag der Patentschrift: **25.09.91**

(21) Anmeldenummer: **88100824.7**

(22) Anmeldetag: **21.01.88**

(51) Int. Cl.⁵: **F02B 55/10**, F01C 21/06, F02B 55/08

(54) **Drehkolbenmotor.**

(30) Priorität: **28.01.87 US 7877**

(43) Veröffentlichungstag der Anmeldung:
**10.08.88 Patentblatt 88/32**

(45) Bekanntmachung des Hinweises auf die
Patenterteilung:
**25.09.91 Patentblatt 91/39**

(84) Benannte Vertragsstaaten:
**DE FR GB IT**

(56) Entgegenhaltungen:
EP-A- 0 120 222    EP-A- 0 167 216
EP-A- 0 203 480    DE-A- 2 010 615
DE-A- 2 355 651    DE-U- 8 212 864
US-A- 3 923 433    US-A- 3 949 711
US-A- 4 021 163    US-A- 4 091 789

PATENT ABSTRACTS OF JAPAN, Band 6, Nr.
240 (M-174)[1118], 27. November 1982; & JP -
A - 57 137 602 (SASAKI) 25.08.1982

(73) Patentinhaber: **John Deere Technologies International Inc.**
**John Deere Road**
**Moline Illinois 61265(US)**

(72) Erfinder: **Jones, Charles**
**208 Forest Drive**
**Hillsdale New Jersey 07642(US)**

(74) Vertreter: **Feldmann, Bernhard**
**DEERE & COMPANY European Office Patent**
**Department Steubenstrasse 36-42 Postfach**
**100862**
**W-6800 Mannheim 1(DE)**

**Beschreibung**

Die Erfindung bezieht sich auf einen Drehkolbenmotor mit einem einen Kolbenraum ummantelnden Drehkolbengehäuse, das Bohrungen für die Kraftstoffzufuhr und die Zündung aufweist und in dem Kühlkanäle vorgesehen sind, wobei im Vergleich zu dem übrigen Bereich des Drehkolbengehäuses im Bereich der Bohrungen für die Kraftstoffzufuhr und zündung eine Vielzahl von Kühlkanälen angeordnet ist.

Bei einem bekannten Drehkolbenmotor (US-A-4 021 163) sind die Kühlkanäle in dem Drehkolbengehäuse gleichmäßig verteilt mit der Folge, daß der Kühlung keine größere Bedeutung beigemessen wird und Bereiche ausgiebig gekühlt werden, in denen eine derartige Kühlung nicht erforderlich ist. Andererseits werden Bereiche, in denen eine stärkere Kühlung zweckmäßig ist, unzureichend gekühlt. Dieses Dokument offenbart jedoch bereits ein metallisches Futter, das den Kolbenraum ummantelt.

Bei dem Drehkolbenmotors (US-A-4 091 789), von dem die Erfindung ausgeht, sind vier Kühlkanäle in dem Bereich für die Kraftstoffzufuhr und die Zündung vorgesehen, im übrigen Bereich des Drehkolbengehäuses jedoch nicht, so daß die Kühlung unzureichend ist.

Andererseits ist es auch nicht mehr neu (DE-A1-2 010 615), in einem Bereich eines Drehkolbengehäuses, der extrem hohen Temperaturen ausgesetzt ist, eine Gruppe von nebeneinanderliegenden Bohrungen vorzusehen, in die Stifte aus wärmeleitendem Werkstoff eingesetzt werden, über die Wärme aus dem von Überhitzung bedrohten Bereich in weitere Gehäuseteile abgeleitet werden soll, weil nach einer weiteren Aussage in diesem Dokument im Drehkolbengehäuse vorgesehene Durchlässe für Kühlmittel sich aus Konstruktionsgründen nicht nahe genug an die gefährdeten Stellen heranbringen ließen. Die Stifte sollen aus Aluminium, Kupfer oder auch Silber bestehen, so daß die zur zusätzlichen Wärmeableitung vorgesehenen Maßnahmen den Aufbau des Drehkolbenmotors unnötig komplizieren und verteuern.

Eine v-förmige Ausbildung von im Drehkolbengehäuse unregelmäßig verteilt angeordneten und eingegossenen Kühlmittelkanälen geht aus der US-A-3 923 433 hervor.

Schließlich ist es auch nicht mehr neu (EP-A2-0 120 222), bei einem herkömmlichen Verbrennungsmotor in dessen Zylinderkopf als wärmeisolierendes Bauteil eine Platte aus Aluminiumtitanat, die in einen Kreisring eingeschrumpft ist, einzuspannen.

Die mit der Erfindung zu lösende Aufgabe wird in einem verbesserten Kühlsystem für Drehkolbenmotoren gesehen. Diese Aufgabe ist nach der Erfindung dadurch gelöst worden, daß die Kühlkanäle durch Bohren hergestellt und in Gruppen zusammengefaßt sind, wobei die Kühlkanäle wenigstens einer Gruppe in einer Ebene verlaufen, die parallel oder etwa parallel zu der Längsmittelachse mindestens einer Bohrung verläuft, und die einzelnen Kühlkanäle im wesentlichen senkrecht zu dieser Bohrung liegen.

Auf diese Weise findet zunächst eine Konzentrierung der Kühlkanäle in dem Bereich statt, in dem die größte Hitzeentwicklung vorherrscht, während andere Bereiche gar nicht oder weniger gekühlt werden, so daß ein Teil der sonst an die Umwelt verlorengehenden Energie, beispielsweise beim Auslaß, zum Aufladen eines Turbogebläses zur Verfügung stehen kann.

Bei herkömmlichen Drehkolbengehäusen werden die Kühlkanäle gegossen, die dann naturgemäß einen relativ großen Durchmesser haben und in der Regel nur Wasser als Kühlmittel erlauben. Hinzu kommt, daß bei gegossenen Kühlkanälen ein entsprechender Mindestabstand zu bearbeiteten Flächen, Wänden, Hohlräumen und benachbarten Kühlkanälen eingehalten werden muß, so daß relativ große Wandstärken zwischen den Kühlkanälen und benachbarten Hohlräumen, Kühlkanälen usw. entstehen. Hierdurch wird zusätzlich das Gewicht des Drehkolbengehäuses unnötig vergrößert. Nach der Erfindung ist deshalb ferner vorgesehen, daß die Kühlkanäle durch Bohren hergestellt werden. Dadurch können Kühlkanäle mit relativ kleinem Durchmesser gebohrt werden, was zu größeren Kühlmittelgeschwindigkeiten führt und eine Verwendung von Öl oder Brennstoff als Kühlmittel ermöglicht. Die Kühlkanalbohrungen können darüber hinaus bis etwa 1 bis 3 mm an den zu kühlenden Flächen vorgesehen werden, so daß größere Wandstärken auch zwischen benachbarten Kühlkanälen vermieden werden, was letztlich zu einer erheblichen Gewichtsersparnis führt, da aus Festigkeitsgründen nicht benötigtes Material entfallen kann.

Nach der Erfindung kann ferner vorgesehen sein, daß das Drehkolbengehäuse im Bereich für die Kraftstoffzufuhr und Zündung eine zum Kolbenraum offene Aussparung zur Aufnahme eines hitzebeständigen Einsatzes aufweist. Hierdurch wird das Drehkolbengehäuse gegenüber der Verbrennungshitze isoliert mit dem Ergebnis, daß mehr Hitze im Bereich des Auslasses zur Verfügung steht, deren Energie dann zum Aufladen genutzt werden kann.

Je nachdem, aus welchem Material das Drehkolbengehäuse hergestellt bzw. gegossen ist, kann es vorteilhaft sein, daß der Kolbenraum von einem mit dem Drehkolbengehäuse verbundenen verschleißarmen Futter ummantelt ist.

Zweckmäßig kann eine weitere Gruppe Kühlkanäle parallel oder etwa parallel zu der inneren Oberfläche des Drehkolbengehäuses angeordnet sein, und wenn das Drehkolbengehäuse mit einem hitzebeständigen Einsatz ausgerüstet ist, kann eine weitere Gruppe Kühlkanäle nahe der Peripherie der Aussparung vorgesehen werden.

Bei Ausrüstung des Drehkolbengehäuses mit einem Einsatz und einem Futter wird ferner vorgeschlagen, daß das Futter an der Unterseite des Einsatzes anliegt.

Im einzelnen können sich die Kühlkanäle von einer Stirnseite zur anderen Stirnseite des Drehkolbengehäuses erstrecken und einen V-förmigen Verlauf haben. Die Kühlkanäle verlaufen hierbei zueinander parallel, können aber in Einzelfällen auch zueinander winklig angeordnet sein, um die Kühlung zu vergrößern.

Letztlich können in dem Einsatz Öffnungen vorgesehen sein, durch die sich Fortsätze der Bohrungen für die Kraftstoffzufuhr und Zündung erstrecken.

In der Zeichnung sind vier nachfolgend näher erläuterte Ausführungsbeispiele nach der Erfindung dargestellt. Es zeigt:

Fig. 1    das Gehäuse eines Drehkolbenmotors im Ausschnitt im Bereich der Kraftstoffzufuhr und Zündung,

Fig. 2    einen Schnitt nach der Linie 2 - 2 in Fig. 1,

Fig. 3    einen ähnlichen Ausschnitt wie Fig. 1, jedoch mit einem Einsatz im Bereich der Kraftstoffzufuhr und Zündung,

Fig. 4    einen Schnitt nach der Linie 4 - 4 in Fig. 3,

Fig. 5    ein weiteres Ausführungsbeispiel der Ausführungsform nach Fig. 3,

Fig. 6    ein Gehäuse eines Drehkolbenmotors im Bereich der Zündkerze und in Ansicht von oben mit anders gestalteten Kühlkanälen und

Fig. 7    einen Schnitt nach der linie 7 - 7 in Fig. 6.

In der Zeichnung ist ein Drehkolbenehäuse 10 eines Drehkolbenmotors ausschnittsweise im Bereich eines oberen Totpunktzenters dargestellt, in dem die Kraftstoffzufuhr- und Zündanlage angeordnet sind. Die innere Oberfläche des Drehkolbengehäuses 10 ist mit einer trochoiden Oberfläche 12 versehen, die einen trochoiden Kolbenraum 14 umschließt, in dem ein in der Zeichnung nicht dargestellter dreikantiger Drehkolben umläuft. Wie ferner aus der Zeichnung hervorgeht, kann ein dünnes Futter 16 an die Oberfläche 12 fest angebracht werden. Hierbei kann das Futter 16 aus verschleißresistentem Werkstoff, wie Stahl, hergestellt sein und wird vorzugsweise bei Drehkolbengehäusen eingesetzt, die aus Aluminium bestehen. Aluminium hat bekanntlich Keinen großen Deformationswiderstand bei hohen Temperaturen, bietet sich aber für Leichtmotoren wegen seiner guten thermischen Leitfähigkeit an.

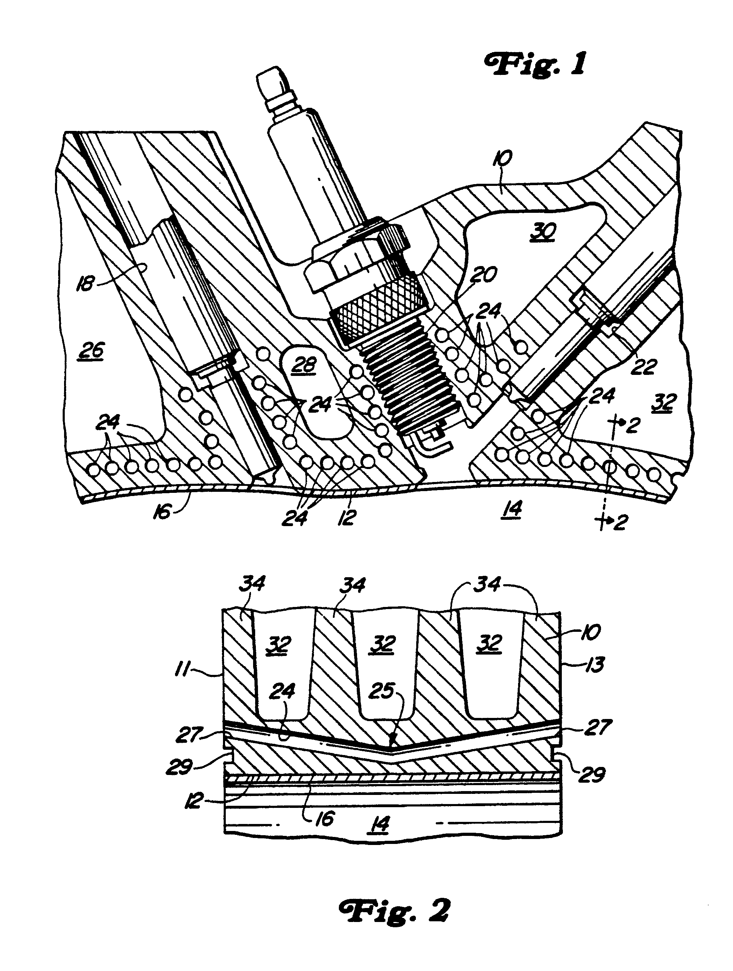

Das in den Figuren 1 und 2 dargestellte Ausführungsbeispiel kann besonders für Gehäusewerkstoffe mit großer Festigkeit, wie Gußeisen, Verwendung finden, das geringe thermische Leitfähigkeit aufweist und daher eine erhöhte Kühlung benötigt. Deshalb sollen Kühlkanäle oder Kühlbohrungen so nah wie möglich an der Gehäuseoberfläche 12, die der stärksten Hitzeentwicklung ausgesetzt ist, vorgesehen werden, um zu verhindern, daß die Oberflächentemperaturen nicht den für die Schmierung und/oder Dichtung vorgesehenen Fettfilm zerstören.

Gegebenenfalls kann bei Gehäusewerkstoffen mit großer Festigkeit auf das Futter 16 verzichtet werden.

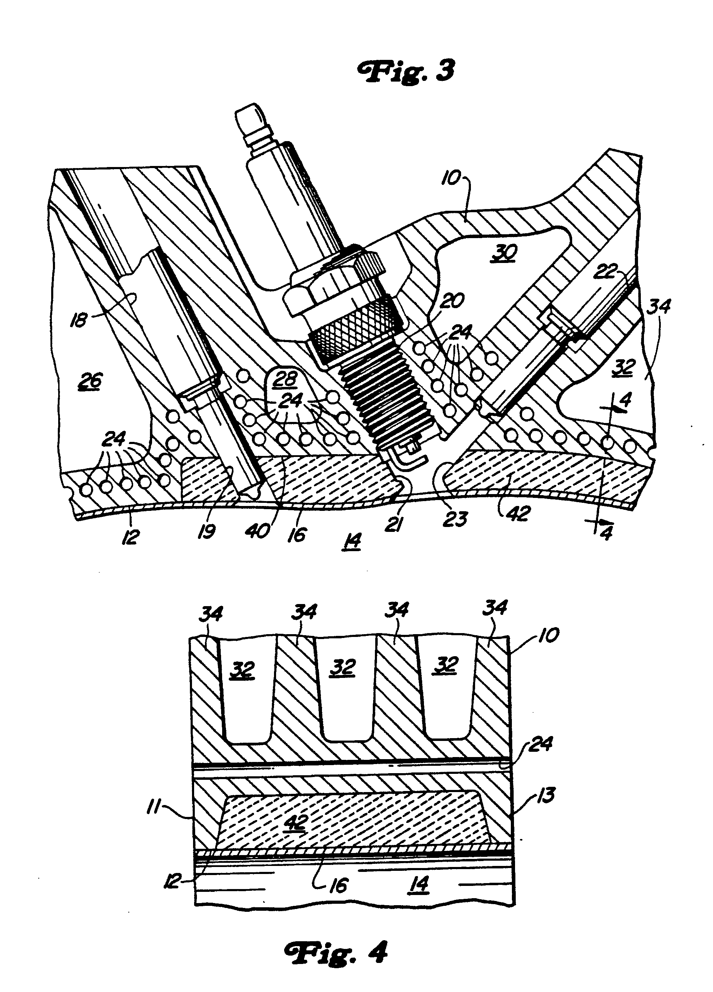

Bei allen in der Zeichnung dargestellten Ausführungsformen sind eine Kraftstoffhauptbohrung 18, eine Zündkerzenbohrung 20 und eine Kraftstoffpilotbohrung 22 in das Drehkolbengehäuse 10 eingearbeitet und zu dem Kolbenraum 14 hin offen, wozu entsprechende Öffnungen auch in dem Futter 16 vorgesehen sind. Ebenfalls sind in dem Drehkolbengehäuse 10 eine Vielzahl von Kühlkanälen 24 vorgesehen, die sich axial durch das Drehkolbengehäuse zwischen dessen Stirnseiten 11 und 13 erstrecken und somit senkrecht zu den Stirnseiten verlaufen. Die Kühlkanäle 24 werden durch Bohren erzielt und sind in verschiedenen Reihen oder Gruppen angeordnet, wobei eine Gruppe in etwa parallel zu der Oberfläche 12 und weitere Gruppen parallel oder etwa parallel zu den Längsachsen der Kraftstoffhaupt- bzw. -pilotbohrung 18, 22 und der Zündkerzenbohrung 20 oder zumindest zu deren Gehäusewänden verlaufen. Das Bohren der Kühlkanäle 24 hat den Vorteil, daß man sie sehr nah an den bearbeiteten Flächen, wie Oberfläche 12 und Bohrungen 18 bis 22, aber auch zu benachbarten Kühlkanälen vorsehen kann. Der Abstand kann 1 bis 3 mm betragen, was bei gegossenen Kühlkanälen nicht möglich ist. Hinzu kommt, daß dann aus Gewichtsersparnisgründen Werkstoff aus Bereichen, in denen keine Kühlkanäle vorgesehen werden sollen oder die aus Festigkeitsgründen entbehrlich erscheinen, entfernt werden kann. Auf diese Weise entstehen Hohl- oder Leerräume 26, 28, 30 und 32 unterschiedlicher Ausgestaltung zumindest im Bereich der Kraftstoffzufuhr und Zündung im Drehkolbengehäuse 10. Aus den Figuren 2 und 4 ist ferner zu ersehen, daß sich zwischen den Stirnseiten 11 und 13 noch radiale Rippen 34 erstrecken, die gegebenenfalls durch nach außen hin offene Hohl- oder Leerräume 32 entstehen. Hierdurch ergibt sich eine weitere Gewichtsersparnis. Aus Fig. 2 ist ferner eine V-förmige Ausgestaltung der Kühlkanäle 24 ersichtlich, deren Mitte 25 bzw. Spitze tiefer liegt als ihre Enden 27, das heißt die Spitzen dieser Kühlkanäle sind mit Bezug auf ihre Enden 27 radial nach innen versetzt, wodurch sich Platz für Nuten 29 in den Stirnseiten 11 und 13 ergibt. In diesen Nuten 29 können nicht dargestellte O-Ringe aufgenommen werden, die das Drehkolbengehäuse 10 gegenüber ebenfalls nicht gezeigten Endgehäusen abschließen, die beidseitig an das Drehkolbengehäuse 10 anschließbar sind.

Fig. 3 zeigt einen ähnlichen Ausschnitt wie Fig. 1, jedoch mit einer Aussparung 40, die in die innere Oberfläche 12 des Drehkolbengehäuses 10 eingearbeitet ist und zur Aufnahme eines Einsatzes 42 dient. Dieser besteht aus isolierendem Werkstoff, wie Keramik, oder hitzebeständigem bzw. schwer schmelzbarem Material, wodurch der Bereich der Kraftstoffzufuhr und Zündung im Drehkolbengehäuse 10 isoliert werden soll. Auch hier erstrecken sich Reihen von gebohrten Kühlkanälen 24 parallel oder etwa parallel zu der inneren Oberfläche der Aussparung und ebenso zu den Bohrungen 18, 20, 22. Der Einsatz 42 kann sich aus dem Kraftstoffzufuhr-und Zündungsbereich in Richtung auf den nicht gezeigten Auslaßbereich erstrecken, und zwar bis etwa zur halben Wegstrecke. Verlängerungen 19, 21, 23 für die Bohrungen 18, 20, 22 erstrecken sich durch den Einsatz 42.

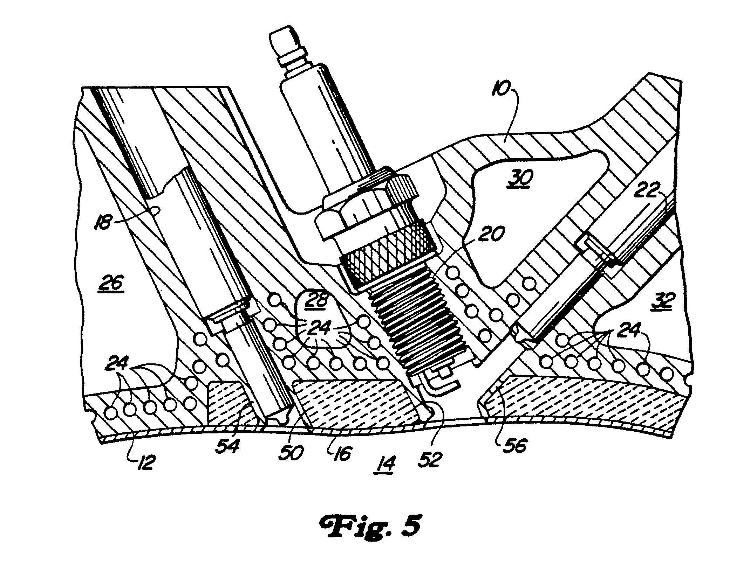

Fig. 5 zeigt eine weitere Ausführungsvariante des Einsatzes 42 nach Fig. 3, der hier Öffnungen 50, 52 aufweist. Durch die Öffnung 50 erstreckt sich ein Hülsenfortsatz 54 des Drehkolbengehäuses 10 und dient als Verlängerung der Hauptkraftstoffbohrung 18. Auch die Öffnung 52 nimmt einen Fortsatz 56 des Drehkolbengehäuses 10 auf, in dem sich die Verlängerungen der Zündkerzenbohrung 20 und der Kraftstoffpilotbohrung 22 schneiden.

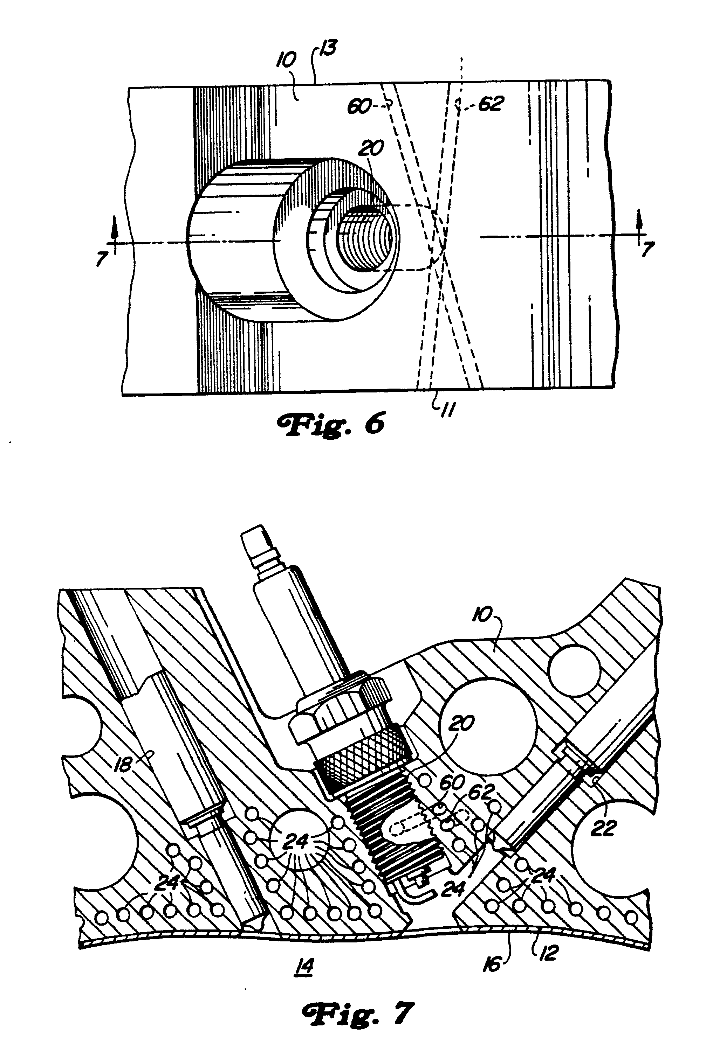

Fig. 6 und 7 geben eine ähnliche Ausführung wie Fig. 1 wieder mit der Abweichung, daß in Fig. 6 und 7 zwei gebohrte Kühlkanäle 60, 62 dargestellt sind, die winklig zu den übrigen Kühlkanälen 24 verlaufen und auch zueinander, so daß es in Fig. 6 den Anschein hat, als ob sich diese beiden Kühlkanäle 60, 62 in der V-förmigen Gabelung zwischen Zündkerzenbohrung 20 und Kraftstoffpilotbohrung 22 treffen würden. Wie aus Fig. 7 hervorgeht, liegen die Kühlkanäle 60, 62 in Ebenen, die senkrecht zu der Längsmittelebene der Zündkerzenbohrung 20 verlaufen. Die Kühlkanäle 60, 62 verbessern die Kühlung im Bereich der V-förmigen Gabelung, da sie einen größeren Oberflächenbereich dem Kühlmittel zum Kontakt mit dem Drehkolbengehäuse zur Verfügung stellen. Ähnliche Kühlkanäle 60, 62 können auch beiderseits aller Bohrungen 18, 20, 22 vorgesehen werden.

Das Kühlmittel kann vorzugsweise Öl oder Brennstoff sein.

**Patentansprüche**

1. Drehkolbenmotor mit einem einen Kolbenraum (14) ummantelnden Drehkolbengehäuse (10), das Bohrungen (18, 20, 22) für die Kraftstoffzufuhr und die Zündung aufweist und in dem Kühlkanäle (24) vorgesehen sind, wobei im Vergleich zu dem übrigen Bereich des Drehkolbengehäuses (10) im Bereich der Bohrungen (18, 20, 22) für die Kraftstoffzufuhr und Zündung eine Vielzahl von Kühlkanälen (24) angeordnet ist, dadurch gekennzeichnet, daß die Kühlkanäle (24) durch Bohren hergestellt und in Gruppen zusammengefaßt sind, wobei die Kühlkanäle (24) wenigstens einer Gruppe in einer Ebene verlaufen, die parallel oder etwa parallel zu der Längsmittelachse mindestens einer Bohrung (18 bzw. 20 bzw. 22) verläuft, und die einzelnen Kühlkanäle (24) im wesentlichen senkrecht zu dieser Bohrung (18 bzw. 20 bzw. 22) liegen.

2. Drehkolbenmotor nach Ansprüch 1, dadurch gekennzeichnet, daß das Drehkolbengehäuse (10) im Bereich für die Kraftstoffzufuhr und Zündung eine zum Kolbenraum (14) offene Aussparung (40) zur Aufnahme eines hitzebeständigen Einsatzes (42) aufweist.

3. Drehkolbenmotor nach Anspruch 1 oder 2, dadurch gekennzeichnet, daß der Kolbenraum (14) von einem mit dem Drehkolbengehäuse (10) verbundenen verschleißarmen Futter (16) ummantelt ist.

4. Drehkolbenmotor nach Anspruch 3, dadurch gekennzeichnet, daß eine weitere Gruppe Kühlkanäle (24) parallel oder etwa parallel zu der inneren Oberfläche (12) des Drehkolbengehäuses (10) angeordnet ist.

5. Drehkolbenmotor nach Anspruch 2, dadurch gekennzeichnet, daß eine weitere Gruppe Kühlkanäle (24) nahe der Peripherie der Aussparung (40) vorgesehen ist.

6. Drehkolbenmotor nach Anspruch 3, dadurch gekennzeichnet, daß das Futter (16) an der Unterseite des Einsatzes (42) anliegt.

7. Drehkolbenmotor nach einem oder mehreren der vorherigen Ansprüche, dadurch gekennzeichnet, daß die Kühlkanäle sich von einer Stirnseite (11) zur anderen Stirnseite (13) des Drehkolbengehäuses (10) erstrecken und einen V-förmigen Verlauf haben.

8. Drehkolbenmotor nach Anspruch 2, dadurch gekennzeichnet, daß in dem Einsatz (42) öffnungen (50, 52) vorgesehen sind, durch die sich Fortsätze (54, 56) der Bohrungen (18, 20, 22) für die Kraftstoffzufuhr und Zündung erstrecken.

## Claims

1. Rotary piston engine with a rotary piston housing (10) enclosing a piston chamber (14), which housing has bores (18, 20. 22) for the fuel inlet and the ignition and lit which there are provided cooling channels (24), wherein a multiplicity of cooling channels (24) are arranged in the region of the bores (18, 20, 22) for the fuel inlet and ignition, compared with the remaining region of the rotary piston housing (10), characterized in that the cooling channels (24) are drilled and are comprised within groups, wherein the cooling channels (24) of at least one group run in a plane which runs parallel or approximately parallel to the longitudinal central axis of at least one bore (18 or 20 or 22), and the individual channels (24) lie substantially perpendicular to this bore (18 or 20 or 22).

2. Rotary piston engine according to claim 1, characterized in that the rotary piston housing (10) has in the region for the fuel inlet and ignition a recess (40) open to the piston chamber (14) for reception of a heat-resistant insert (42).

3. Rotary piston engine according to claim 1 or 2, characterized in that the piston chamber (14) is surrounded by a wear-resistant liner (16) connected to the rotary piston housing (10).

4. Rotary piston engine according to claim 3, characterized in that a further group of cooling channels (24) is arranged parallel or approximately parallel to the inner surface (12) of the rotary Piston housing (10).

5. Rotary piston engine according to claim 2, characterized in that a further group of cooling channels is arranged near the periphery of the recess (40).

6. Rotary piston engine according to claim 3, characterized in that the liner (16) bears against the underside of the insert (42).

7. Rotary piston engine according to one or more of the preceding claims, characterized in that the cooling channels extend from one end face (11) to the other end face (13) of the rotary piston housing (10) and have a V-shaped course.

8. Rotary piston engine according to claim 2, characterized in that openings (50, 52) are provided in the insert (42), through which extend continuations (54, 56) of the bcres (18, 20, 22) for the fuel inlet and ignition.

## Revendications

1. Moteur à piston rotatif comportant un logement (10) du piston rotatif, qui enveloppe une chambre (14) du piston et comporte les perçages (18,20,22) pour l'alimentation en carburant et l'allumage et dans laquelle sont prévus des canaux de refroidissement (24), une multiplicité de canaux de refroidissement (24) étant disposés dans la zone des perçages (18,20,22) pour l'alimentation en carburant et l'allumage, comparativement à la zone restante du logement (10) du piston rotatif, caractérisé en ce que les canaux de refroidissement (24) sont réalisés par perçage et sont réunis par groupes, les canaux de refroidissement (24) d'au moins un groupe étant situés dans un plan parallèle ou approximativement parallèle à l'axe médian longitudinal d'au moins un perçage (18 ou 20 ou 22), et les différents canaux de refroidissement (24) étant sensiblement perpendiculaires à ce perçage (18 ou 20 ou 22).

2. Moteur à piston rotatif selon la revendication 1, caractérisé en ce que le logement (10) du piston rotatif comporte, dans la zone de l'alimentation en carburant et de l'allumage, un évidement (40) ouvert en direction de la chambre (14) du piston et servant à loger un insert (42) résistant à la chaleur.

3. Moteur à piston rotatif selon la revendication 1 ou 2, caractérisé en ce que la chambre (14) du piston est entourée par une chemise (16) présentant une faible usure et raccordée au logement (10) du piston rotatif.

4. Moteur à piston rotatif selon la revendication 3, caractérisé en ce qu'un autre groupe de canaux de refroidissement (24) est parallèle ou approximativement parallèle à la surface intérieure (12) du logement (10) du piston rotatif.

5. Moteur à piston rotatif selon la revendication 2, caractérisé en ce qu'un autre groupe de canaux de refroidissement (24) est prévu à proximité de la périphérie de l'évidement (40).

6. Moteur à piston rotatif selon la revendication 3, caractérisé en ce que la chemise (16) s'applique contre la face inférieure de l'insert (42).

7. Moteur à piston rotatif selon une ou plusieurs des revendications précédentes, caractérisé en ce que les canaux de refroidissement s'étendent d'une face frontale (11) à l'autre face frontale (13) du logement (10) du piston rotatif et possèdent une allure en forme de V.

8. Moteur à piston rotatif selon la revendication 2, caractérisé en ce que dans l'insert (42), il est prévu des ouvertures (50,52) dans lesquelles s'étendent des prolongements (54,56) des perçages (18,20,22) prévus pour l'alimentation en carburant et l'allumage.

*Fig. 1*

10

32

20

18

24

26

28

24

24

24

12

22

32

2

14

2

16

*Fig. 2*

34

34

34

32

32

32

10

11

13

24

25

27

27

29

29

12

16

14

7

*Fig. 3*

*Fig. 4*

**Fig. 5**

Fig. 6

Fig. 7